# FASCICULE DE BREVET EUROPEEN

(11) **EP 1 990 225 B1**
(45) Date de publication et mention de la délivrance du brevet: **22.02.2012**
(21) Numéro de dépôt: 08155048.5
(22) Date de dépôt: 23.04.2008
(51) Int. Cl.: B60R 19/48, B60R 19/52, B60K 13/02, B60K 13/06, B60K 11/08

(54) **Véhicule équipé d'un absorbeur de choc pour piéton comprenant un col d'entrée d'air**
Mit einem Anpralldämpfer für Fußgänger ausgestattetes Fahrzeug, das mit einem Lufteinlassstutzen ausgestattet ist
Vehicle equipped with a pedestrian guard comprising an air-intake neck

(30) Priorité: 10.05.2007 FR 0754967
(43) Date de publication de la demande: 12.11.2008
(73) Titulaire: Peugeot Citroën Automobiles SA, 78140 Vélizy-Villacoublay (FR)
(72) Inventeur: Verdier, Laurent, 75014, PARIS (FR)
(74) Mandataire: Ménès, Catherine

(56) Documents cités:
- EP-A- 0 451 916
- WO-A-02/074570
- US-A- 4 653 788
- US-A- 5 251 712
- US-A- 5 860 685
- US-A1- 2006 102 109
- US-B1- 6 945 576

## Description

Le domaine technique de l'invention concerne les dispositifs d'absorption de choc placés sous le capot ou le pare-chocs d'un véhicule automobile, et destinés à amortir l'impact d'un piéton en cas de collision accidentelle. Ces dispositifs permettent ainsi, pour une plage de vitesses donnée du véhicule, de minimiser les blessures du piéton, en évitant les fractures du crâne ou les fractures des jambes. Afin de répondre à des exigences de style tendant à une révision des proportions du véhicule, et afin d'optimiser le rendement d'architecture, qui est le rapport entre la longueur utile du véhicule pour le client sur la longueur du véhicule hors tout, la longueur du porte à faux avant du véhicule a été réduite. Cette réduction de longueur s'accompagne automatiquement d'une diminution des volumes sous le capot du véhicule, obligeant les constructeurs automobile à agencer les pièces de façon compacte, c'est-à-dire avec un encombrement minimal. Donc, plus spécifiquement, l'invention se rapporte à une partie avant de véhicule, impliquant un agencement particulier de certaines pièces sous le capot, dont un dispositif absorbeur de choc et le circuit d'alimentation en air du moteur, ces deux éléments étant étroitement associés pour occuper le moins de place possible. Cette réduction du volume d'occupation des pièces, est rendu difficile en raison de certaines contraintes fonctionnelles à respecter, notamment celles liées à la production de bruit. En effet, le col d'entrée d'air du circuit d'alimentation en air du moteur, est matérialisé par un canal rectiligne, dont la longueur doit être supérieure à une valeur seuil, pour éviter des phénomènes vibratoires aptes à engendrer un bruit intempestif et désagréable pour les passagers du véhicule.

Pour être précis et clair dans la description qui va suivre, le col d'entrée d'air est constitué par ce canal d'air rectiligne, ayant une longueur minimale pour éviter la génération de bruit lors du passage de l'air.

Les dispositifs d'absorption de choc piéton comprenant une arrivée d'air existent déjà et ont fait l'objet de brevet. On peut, par exemple, citer le brevet JP2005001529 qui se rapporte à une structure avant de véhicule automobile dotée d'un absorbeur de choc, dans lequel est réalisée une entrée d'air pour alimenter un circuit d'alimentation en air de certaines pièces situées sous le capot du véhicule. Cette entrée présente une chicane de faible dimension, pour éviter l'introduction directe d'eau ou de toutes autres particules indésirables en provenance de l'extérieur du véhicule. Pour cette invention, l'absorbeur ne contient pas de col d'entrée d'air au sens dans lequel il a été défini au paragraphe précédent, et l'air capturé par l'entrée provient de l'interstice entre le capot et le pare-choc.

On connait par le document US6945576 un pare-choc avant de véhicule automobile selon le préambule de la revendication 1.

La partie avant du véhicule automobile selon l'invention comprend un agencement optimisé des pièces sous le capot, visant à réduire l'encombrement de celles-ci et donc de gagner significativement de la place. Ce gain de place est motivé, soit par des raisons de style liées à une réduction de la longueur du porte-à-faux avant du véhicule, soit par la nécessité d'ajouter d'autres pièces sous le capot dudit véhicule. Les pièces visées par cet agencement, sont le circuit d'alimentation en air du moteur et un dispositif d'absorption de choc, destiné à amortir le choc d'un piéton en cas de collision accidentelle.

La présente invention a pour objet une partie avant d'un véhicule automobile, comprenant un groupe motopropulseur, un circuit d'alimentation en air dudit moteur impliquant un filtre à air et un col d'entrée d'air, un capot, un pare-choc dans lequel est logé un dispositif absorbeur de choc destiné à amortir l'impact d'un fémur de piéton dans le cas d'une collision accidentelle, ledit dispositif absorbeur de choc comportant une pièce déformable, la pièce déformable étant une pièce allongée disposée transversalement par rapport à l'axe longitudinal du véhicule et soutenue par un module de refroidissement du moteur, ledit module étant positionné devant ledit moteur dans le véhicule. La principale caractéristique d'une partie avant de véhicule selon l'invention, est que la pièce déformable comprend le col d'entrée d'air du circuit d'alimentation en air du moteur, la pièce déformable étant une pièce allongée disposée transversalement par rapport à l'axe longitudinal du véhicule et soutenue par un module de refroidissement du moteur, ledit module étant positionné devant ledit moteur dans le véhicule. De cette manière, la pièce déformable a une double fonction ; l'une, pour laquelle elle a été originellement conçue, à savoir amortir le choc d'un piéton, et l'autre, qui est nouvelle et qui consiste à convoyer de l'air frais vers le moteur.

Avantageusement, le col d'entrée d'air est matérialisé par un premier canal du circuit d'alimentation en air, ledit canal étant cylindrique et ayant un rapport longueur sur diamètre supérieur à 4. Ce dimensionnement indique clairement que ledit canal doit être allongé.

De façon préférentielle, la longueur dudit premier canal est supérieure à 40 cm. Une telle longueur est significative sous le capot d'un véhicule automobile, et nécessite donc un arrangement précis pour ne pas entraver le fonctionnement des autres pièces environnantes, tout en demeurant efficace.

De façon avantageuse, le pare-choc constitue la face avant dudit véhicule et la pièce déformable est placée au niveau de la partie supérieure dudit pare-choc, dans une zone adjacente au capot. Cette disposition haute de la pièce dans le pare-choc, est parfaitement adaptée à l'amortissement du choc d'un fémur de piéton en cas de collision accidentelle. Préférentiellement, le pare-choc est arrondi et est en continuité avec le capot, pour éviter de faire apparaître une marche entre ces deux éléments, qui pourrait agir comme une arête saillante vis-à-vis d'un piéton.

Avantageusement, le pare-choc possède une multiplicité d'ouvertures de manière à laisser passer de l'air, une partie de l'air ainsi transmis pénétrant dans le col d'entrée. Selon un mode de réalisation préféré de l'invention, ces ouvertures sont pratiquées dans la calandre du véhicule. Avec une telle configuration, puisque la pièce déformable, qui comporte le col d'entrée d'air, est située en partie supérieure de pare-choc, l'air va pénétrer dans ledit col, par en dessous.

Préférentiellement, la pièce allongée et le module de refroidissement sont séparés par une pièce d'interposition, correspondant à une traverse supérieure de façade.

Avantageusement, le premier canal du circuit d'alimentation en air du moteur, est placé transversalement par rapport à l'axe longitudinal du véhicule. De cette manière, le grand axe dudit canal et le grand axe de la pièce allongée déformable, sont parallèles.

De façon préférentielle, le premier canal possède une ouverture débouchant sur l'extérieur de la pièce déformable dans le pare-choc, ladite ouverture étant destinée à capturer une partie de l'air ayant traversé le pare-choc.

De façon avantageuse, l'axe de l'ouverture est vertical. En effet, il faut éviter que l'ouverture soit placée en face de l'air incident qui a traversé le pare-choc, pour empêcher l'introduction d'eau ou d'autres particules dans le col d'entrée d'air. Le fait que l'axe de l'ouverture soit vertical, signifie que l'ouverture est perpendiculaire à la direction de propagation de l'air dans le pare-choc. Préférentiellement, l'ouverture est située vers le bas, pour capturer l'air dans le pare-choc.

De façon préférentielle, la pièce déformable est traversée par un deuxième canal prenant naissance au niveau du premier canal, ledit deuxième canal étant disposé parallèlement à l'axe longitudinal du véhicule et se terminant dans le filtre à air. De cette manière, le circuit d'alimentation en air du moteur, présente deux canaux perpendiculaires et en communication l'un avec l'autre.

Selon un premier mode de réalisation préféré de l'invention, l'ouverture est située à l'une des extrémités du premier canal, et le deuxième canal prend naissance au niveau de l'autre extrémité dudit premier canal, de manière à relier le filtre à air qui se retrouve en position déportée par rapport au moteur.

Selon un deuxième mode de réalisation préféré de l'invention, l'ouverture est située dans la zone centrale du premier canal, et le deuxième canal prend naissance au niveau de l'une des extrémités du premier canal, l'autre extrémité dudit premier canal étant obturée pour définir un résonateur. En effet, l'ouverture permet de distinguer deux parties au niveau du premier canal, l'une étant en communication avec le deuxième canal, l'autre délimitant un espace fermé pour constituer un résonateur. Plus généralement, l'ouverture et le deuxième canal sont implantés du même coté sur le premier canal, l'autre coté dudit premier canal étant obturé pour définir un espace clos, jouant le rôle d'un résonateur.

Préférentiellement, la pièce déformable est fixée au pare-chocs et présente, sur sa partie supérieure, une multiplicité de nervures aptes à laisser passer de l'air frais sous le capot, pour refroidir certaines pièces soumises à de fortes contraintes thermiques. Ainsi, ces nervures constituent des passages permanents d'air frais, destinés à alimenter l'espace situé entre le capot du véhicule et le groupe motopropulseur, constituant une source de refroidissement supplémentaire pour tous les objets placés dans cet espace.

De façon avantageuse, les nervures sont disposées parallèlement à l'axe longitudinal du véhicule. Cette disposition favorise la circulation d'air sous le capot.

De façon préférentielle, la pièce déformable est réalisée en polypropylène ou en polyéthylène.

Les parties avant de véhicule selon l'invention présentent l'avantage de répondre à une tendance de style à la mode, préconisant une longueur réduite de la partie avant en porte à faux. Elles présentent également l'avantage de proposer un agencement de certaines pièces, qui est peu encombrant, libérant un peu plus de volume pour les autres pièces ou permettant de placer d'autres pièces sous le capot.

On donne ci-après une description détaillée d'un mode de réalisation préféré d'une partie avant de véhicule selon l'invention, en se référant aux figures 1 à 10.
- La figure 1 est une vue en coupe longitudinale, selon un plan horizontal passant par le col d'entrée d'air, d'un premier mode de réalisation préféré d'une partie avant d'un véhicule selon l'invention.
- La figure 2 est une vue en coupe longitudinale selon un plan vertical passant par l'ouverture du col d'entrée d'air, d'un premier mode de réalisation préféré d'une partie avant de véhicule selon l'invention
- La figure 3 est une vue en coupe longitudinale selon un plan vertical passant par le col d'entrée d'air, d'un premier mode de réalisation préféré d'une partie avant de véhicule selon l'invention
- La figure 4 est une vue en coupe longitudinale selon un plan vertical passant par le deuxième canal du circuit d'alimentation en air, d'un premier mode de réalisation préféré d'une partie avant de véhicule selon l'invention
- La figure 5 est une vue en coupe longitudinale selon un plan vertical passant par le deuxième canal du circuit d'alimentation en air, d'un deuxième mode de réalisation préféré d'une partie avant de véhicule selon l'invention.
- La figure 6 est une vue en coupe longitudinale selon un plan horizontal passant par le col d'entrée d'air, du deuxième mode de réalisation préféré d'une partie avant de véhicule selon l'invention.
- La figure 7 est une vue en coupe longitudinale selon un plan horizontal passant par le col d'entrée d'air, d'un troisième mode de réalisation préféré d'une partie avant de véhicule selon l'invention.
- La figure 8 est une vue en coupe longitudinale selon un plan vertical passant par le col d'entrée d'air, d'un perfectionnement d'une partie avant de véhicule selon l'invention.
- La figure 9 est une coupe longitudinale selon un plan vertical, d'une partie avant d'un véhicule selon l'invention, avant le choc d'un fémur de piéton.
- La figure 10 montre la partie avant de la figure 9 après le choc d'un fémur de piéton.

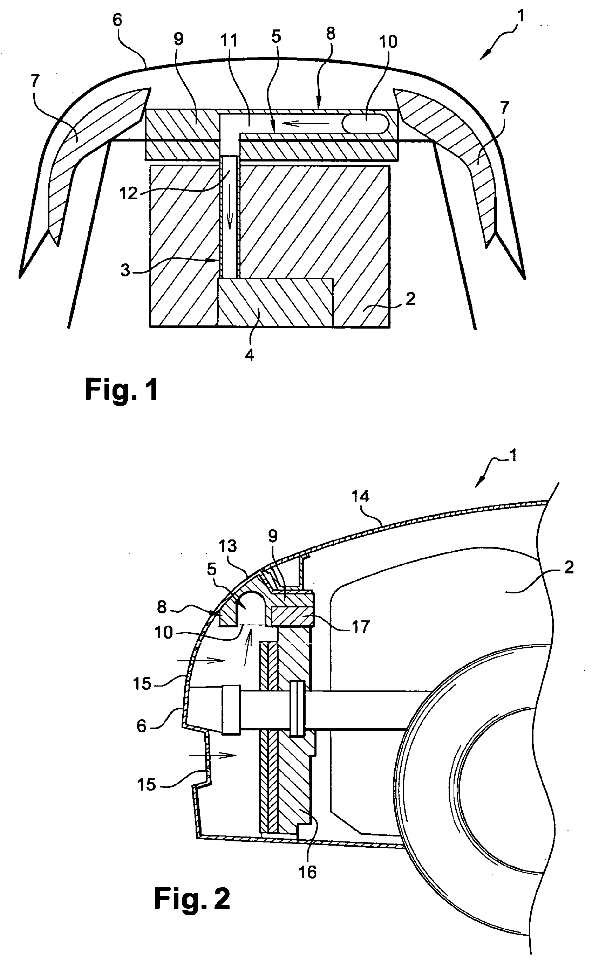

En se référant à la figure 1, une partie avant 1 de véhicule automobile selon l'invention, comprend un groupe motopropulseur 2, un circuit d'alimentation 3 en air du moteur 2 impliquant un filtre à air 4 et un col d'entrée d'air 5, un pare-choc 6, des projecteurs 7 et un dispositif absorbeur 8 de choc, destiné à amortir le choc d'un fémur de piéton dans le cas d'une collision accidentelle. Le pare-choc 6 constitue la face avant de la partie avant d'un véhicule automobile. Le dispositif absorbeur 8 de choc comprend une pièce 9 déformable et allongée, fixée à l'intérieur du pare-choc 6, et dont l'axe longitudinal est perpendiculaire à l'axe longitudinal du véhicule automobile. Autrement dit, la pièce déformable 9 est disposée transversalement par rapport à l'axe longitudinal du véhicule. Cette pièce 9, qui est réalisée en polypropylène ou en polyéthylène, comprend une ouverture 10, dont l'axe est vertical, et un premier canal 11 placé longitudinalement dans ladite pièce 9, ledit canal 11 étant prolongé par un deuxième canal 12, qui lui est perpendiculaire et qui débouche dans le filtre à air 4 placé à l'arrière du moteur 2, coté habitacle du véhicule.

En se référant aux figures 2, 3 et 4, la partie supérieure 13 du pare-choc 6 a une forme arrondie qui se retrouve en continuité du capot 14, évitant de créer une marche entre lesdits éléments, qui pourrait alors agir sur le piéton comme une arête saillante dangereuse. La pièce déformable 9 est logée dans cette partie supérieure 13 du pare-choc 6, au voisinage immédiat du capot 14. Le pare-choc 6 possède une pluralité d'ouvertures 15 destinées à laisser passer de l'air à l'intérieur de la partie avant 1 du véhicule. A l'avant du moteur 2, est placé un module 16 de refroidissement ayant sensiblement la forme d'un parallélépipède rectangle en position verticale et disposé transversalement par rapport à l'axe longitudinal du véhicule. La pièce déformable 9 vient en appui sur ledit module 16 de refroidissement, par l'intermédiaire d'une pièce d'interposition 17, représentée par une traverse supérieure de façade. De cette manière, la pièce déformable 9 est à la fois au contact du pare-choc 6 et du module de refroidissement 16.

Sur la figure 2, est matérialisée la position de l'ouverture 10 du circuit d'alimentation 3 en air du moteur 2. Cette ouverture 10 est dirigée vers le bas et peut donc récupérer une fraction de l'air qui a traversée le pare-choc 6. A ce sujet, le module de refroidissement 16 joue le rôle d'un déflecteur, en déviant une partie de l'air vers l'ouverture 10. Ladite ouverture 10 est positionnée perpendiculairement à la direction de propagation de l'air, pour éviter d'être en prise directe avec de l'eau ou des particules parasites en provenance de l'extérieur du véhicule, et qui pourraient pénétrer dans le col 5 d'entrée d'air et polluer le circuit d'alimentation 3 en air du moteur 2.

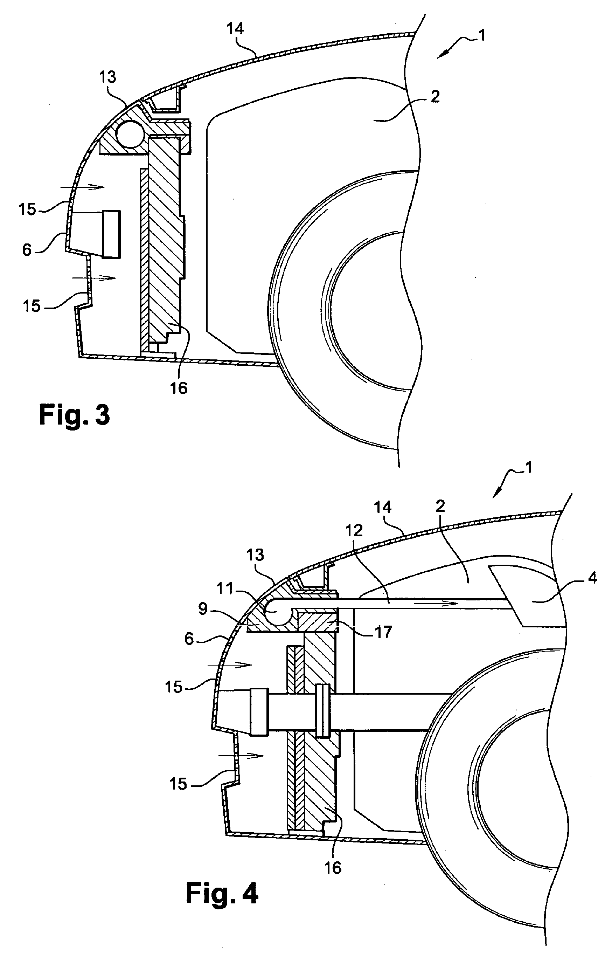

En se référant à la figure 3, le premier canal 11 représentant le col d'entrée d'air 5, est complètement inclus dans la pièce déformable 9. Ce premier canal 11 est disposé transversalement par rapport à l'axe longitudinal du véhicule, comme l'est cette pièce déformable 9. La longueur de ce premier canal 11 est de 400mm.

En se référant à la figure 4, le deuxième canal 12 a la même section que le premier canal 11 et est parallèle à l'axe longitudinal du véhicule. Ce deuxième canal 12 met en communication le premier canal 11 avec le filtre à air 4 du circuit d'alimentation 3 en air du moteur 2, ledit filtre 4 étant logé à l'arrière dudit moteur 2 au niveau de sa partie supérieure. Globalement le circuit d'alimentation 3 en air a la forme d'un L entre l'ouverture 10 et le filtre à air 4.

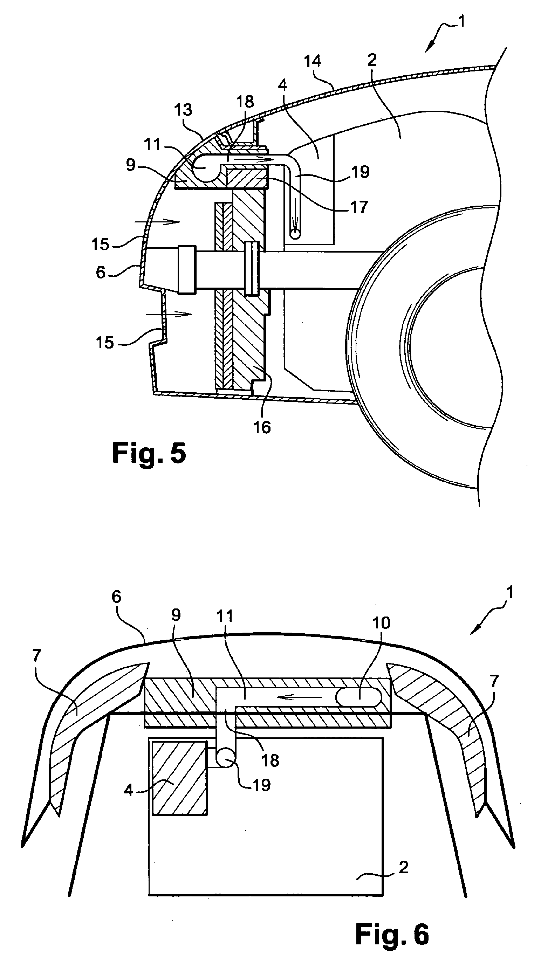

En se référant aux figures 5 et 6, un deuxième mode de réalisation préféré d'une partie avant 1 de véhicule selon l'invention, met en oeuvre un filtre à air 4 situé à l'avant du moteur 2, au niveau de sa partie supérieure et en position déportée. Pour cette configuration, l'ouverture 10 est située à l'une des extrémités du premier canal 11, et le deuxième canal prend naissance au niveau de l'autre extrémité dudit premier canal 11. Ce deuxième canal est recourbé et présente ainsi deux segments 18, 19, l'un 18 étant horizontal et l'autre 19 étant vertical, ledit segment horizontal 18 assurant la communication entre le premier canal 11 et le segment vertical 19. Ce segment vertical 19 descend pour rejoindre la partie inférieure du filtre à air 4.

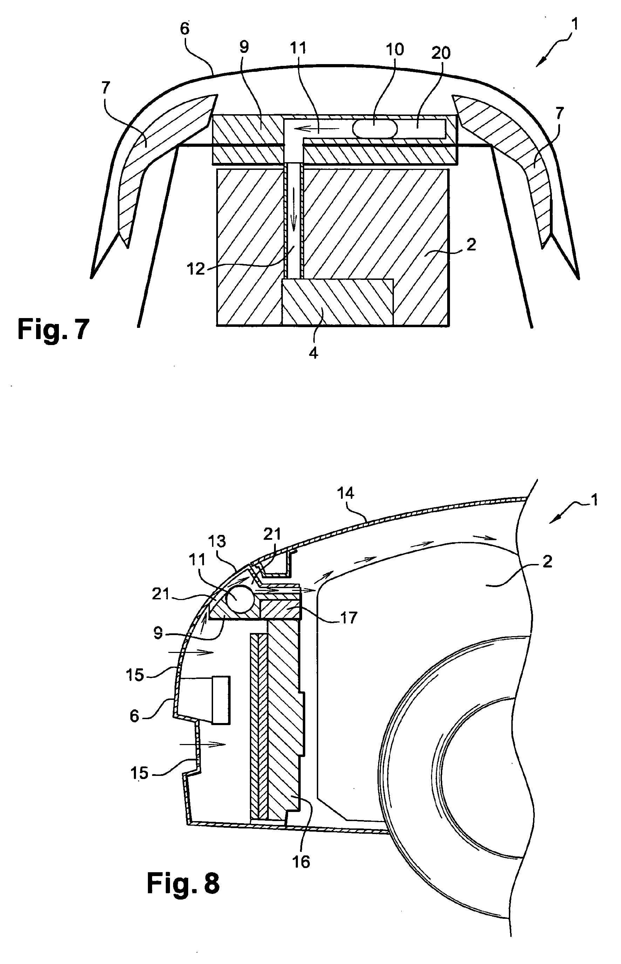

En se référant à la figure 7, un troisième mode de réalisation préféré de l'invention implique un filtre à air 4 placé à l'arrière du moteur 2, dans sa partie supérieure. Pour cette configuration, l'ouverture 10 est placée au niveau de la zone centrale du premier canal 11 et est dirigée vers le bas. Ledit premier canal 11 est obturé à l'une de ses extrémités, et le deuxième canal 12 prend naissance à l'autre extrémité de ce premier canal 11. De cette manière, l'air qui pénètre par l'ouverture 10, envahit, d'une part, le compartiment obturé 20 du premier canal 11 situé d'un coté de l'ouverture 10, ledit compartiment jouant alors le rôle d'un résonateur, et, d'autre part, le deuxième canal 12 pour acheminer l'air jusqu'au filtre à air 4. Cet agencement particulier des différentes pièces crée donc un résonateur 20.

En se référant à la figure 8, un perfectionnement de l'invention consiste à créer une zone de passage de l'air, au niveau de la pièce déformable 9, pour refroidir les pièces ou objets compris dans l'espace situé sous le capot 14 et au dessus du moteur 2. Ce passage d'air est constitué par une pluralité de nervures 21 disposées parallèlement à l'axe longitudinal du véhicule, lesdites nervures 21 étant positionnées au niveau de la partie supérieure de la pièce déformable 9 et contre la paroi interne du pare-choc 6. L'air, qui traverse ainsi en permanence la pièce déformable 9, circule entre le groupe motopropulseur 2 et le capot 14.

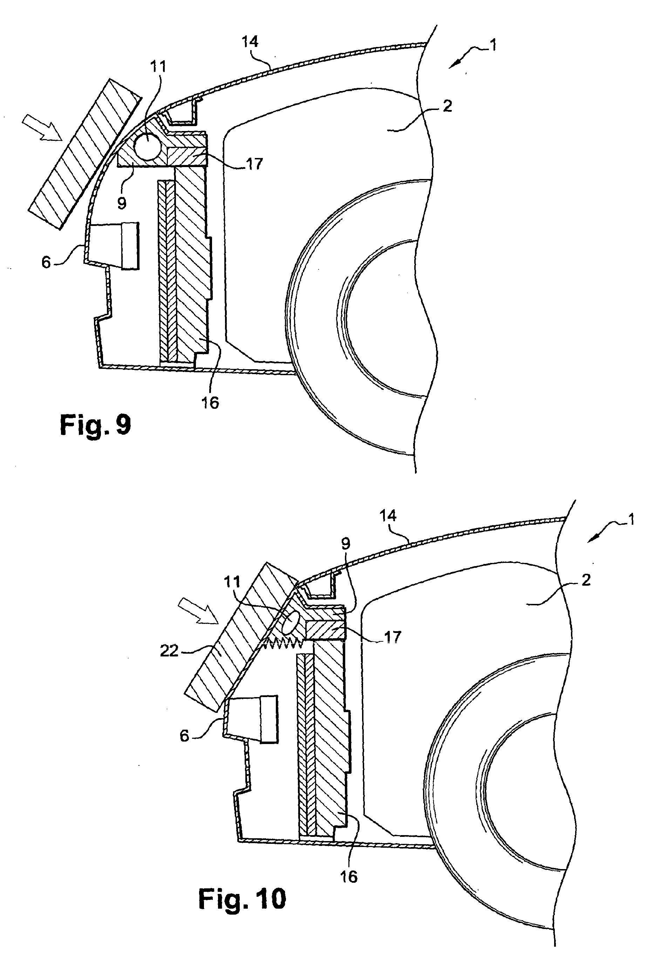

La figure 9 permet de justifier la forme générale de la partie avant 1 d'un véhicule selon l'invention, ainsi que le positionnement et l'agencement de certaines pièces dans ladite partie avant 1. La pièce 22 rectangulaire et inclinée, située à l'extérieur du véhicule et précédée d'une flèche, matérialise un fémur de piéton. La flèche représente le sens suivant lequel ledit fémur va se déplacer, suite à un impact avec le pare-choc 6 avant du véhicule, dans le cas d'une collision accidentelle. Le sens de la flèche suppose que le piéton bascule après l'impact.

En se référant à la figure 10, le fémur 22 vient heurter la partie supérieure arrondie 13 du pare-choc 6, qui se trouve en continuité du capot 14. Cette partie supérieure 13 se déforme alors sous l'effet du choc, entrainant également la déformation de la pièce déformable 9 logée dans ladite partie supérieure 13. Pour une certaine gamme de vitesses modérées du véhicule, ces déformations devraient empêcher toute fracture du fémur et autres blessures graves aux jambes du piéton. A travers cette illustration, sont justifiés, la forme arrondie 13 du pare-choc 6, la mise en continuité dudit pare-choc 6 avec le capot 14 pour éviter la création d'une marche saillante, ainsi que la position haute, dans le pare-choc 6, de la pièce déformable 9.

## Revendications

1. Partie avant (1) d'un véhicule automobile, comprenant un groupe motopropulseur (2), un circuit d'alimentation (3) en air dudit moteur (2) impliquant un filtre (4) à air et un col d'entrée (5) d'air , un capot (14), un pare-choc (6) dans lequel est logé un dispositif absorbeur (8) de choc destiné à amortir l'impact d'un fémur de piéton dans le cas d'une collision accidentelle, ledit dispositif absorbeur (8) de choc comportant une pièce déformable (9), **caractérisée en ce que** la pièce déformable (9) comprend le col d'entrée (5) d'air du circuit d'alimentation (3) en air du moteur (2), la pièce déformable (9) étant une pièce allongée disposée transversalement par rapport à l'axe longitudinal du véhicule et soutenue par un module (16) de refroidissement du moteur (2), ledit module (16) étant positionné devant ledit moteur (2) dans le véhicule.

2. Partie avant de véhicule automobile selon la revendication 1, **caractérisée en ce que** le col d'entrée (5) d'air est matérialisé par un premier canal (11) du circuit d'alimentation (3) en air, ledit canal (11) étant cylindrique et ayant un rapport longueur sur diamètre supérieur à 4.

3. Partie avant de véhicule automobile selon l'une quelconque des revendications 1 ou 2, **caractérisée en ce que** le pare-choc (6) constitue la face avant dudit véhicule et la pièce déformable (9) est placée au niveau de la partie supérieure (13) dudit pare-choc (6), dans une zone adjacente au capot (14).

4. Partie avant de véhicule automobile selon l'une quelconque des revendications 1 à 3, **caractérisée en ce que** le pare-choc (6) possède une multiplicité d'ouvertures (15) de manière à laisser passer de l'air, une partie de l'air ainsi transmis pénétrant dans le col d'entrée (5).

5. Partie avant de véhicule selon l'une quelconque des revendications 1 ou 2, **caractérisée en ce que** la pièce allongée (9) et le module (16) de refroidissement sont séparés par une pièce d'interposition (17), correspondant à une traverse supérieure de façade.

6. Partie avant de véhicule selon l'une quelconque des revendications 1 ou 2, **caractérisée en ce que** le premier canal (11) du circuit d'alimentation (3) en air du moteur (2), est placé transversalement par rapport à l'axe longitudinal du véhicule.

7. Partie avant de véhicule selon la revendication 4, **caractérisée en ce que** le premier canal (11) possède une ouverture (10) débouchant sur l'extérieur de la pièce déformable (9) dans le pare-choc (6), ladite ouverture (10) étant destinée à capturer une partie de l'air ayant traversé le pare-choc (6).

8. Partie avant de véhicule selon la revendication 7, **caractérisée en ce que** l'axe de l'ouverture (10) est vertical.

9. Partie avant de véhicule selon l'une quelconque des revendications 6 à 8, **caractérisée en ce que** la pièce déformable (9) est traversée par un deuxième canal (12) prenant naissance au niveau du premier canal (11), ledit deuxième canal (12) étant disposé parallèlement à l'axe longitudinal du véhicule et se terminant dans le filtre à air (4).

10. Partie avant de véhicule selon la revendication 9, **caractérisée en ce que** l'ouverture (10) est située à l'une des extrémités du premier canal (11), et **en ce que** le deuxième canal (12) prend naissance au niveau de l'autre extrémité dudit premier canal (11), de manière à relier le filtre (4) à air qui se retrouve en position déportée par rapport au moteur (2).

11. Partie avant de véhicule selon la revendication 9, **caractérisée en ce que** l'ouverture (10) est située dans la zone centrale du premier canal (11), et **en ce que** le deuxième canal (12) prend naissance au niveau de l'une des extrémités du premier canal (11), l'autre extrémité dudit premier canal (11) étant obturée pour définir un résonateur (20).

12. Partie avant de véhicule selon l'une quelconque des revendications 1 à 11, **caractérisée en ce que** la pièce déformable (9) est fixée au pare-choc (9) et présente, sur sa partie supérieure, une multiplicité de nervures (21) aptes à laisser passer de l'air frais sous le capot (14), pour refroidir certaines pièces soumises à de fortes contraintes thermiques.

13. Partie avant de véhicule selon la revendication 14, **caractérisée en ce que** les nervures (21) sont disposées parallèlement à l'axe longitudinal du véhicule.

14. Partie avant de véhicule selon l'une quelconque des revendications précédentes, **caractérisée en ce que** la pièce déformable (9) est réalisée en polypropylène ou en polyéthylène.

## Claims

1. A front part (1) of a motor vehicle, comprising a power train (2), a supply circuit (3) for supplying air to the said engine (2) including an air filter (4) and an air intake duct (5), a bonnet (14), a bumper (6) in which there is housed a shock-absorbing device (8) intended to dampen the impact of a femur of a pedestrian in the case of an accidental collision, the said shock-absorbing device (8) comprising a deformable piece (9), **characterized in that** the deformable piece (9) comprises the air intake duct (5) of the supply circuit (3) for supplying air to the engine (2), the deformable piece (9) being an elongated piece disposed transversely with respect to the longitudinal axis of the vehicle and supported by a cooling module (16) of the engine (2), the said module (16) being positioned in front of the said engine (2) in the vehicle.

2. The front part of a motor vehicle according to Claim 1, **characterized in that** the air intake duct (5) is realized by a first channel (11) of the air supply circuit (3), the said channel (11) being cylindrical and having a ratio of length over diameter greater than 4.

3. The front part of a motor vehicle according to any one of Claims 1 or 2, **characterized in that** the bumper (6) constitutes the front face of the said vehicle and the deformable piece (9) is placed at the level of the upper part (13) of the said bumper (6), in a zone adjacent to the bonnet (14).

4. The front part of a motor vehicle according to any one of Claims 1 to 3, **characterized in that** the bumper (6) has a multiplicity of openings (15) so as to allow air to pass, with a portion of the air which is thus transmitted penetrating into the intake duct (5).

5. The front part of a vehicle according to any one of Claims 1 or 2, **characterized in that** the elongated piece (9) and the cooling module (16) are separated by an interposition piece (17) corresponding to an upper front crossmember .

6. The front part of a vehicle according to any one of Claims 1 or 2, **characterized in that** the first channel (11) of the supply circuit (3) for supplying air to the engine (2) is placed transversely with respect to the longitudinal axis of the vehicle.

7. The front part of a vehicle according to Claim 4, **characterized in that** the first channel (11) has an opening (10) opening out on the exterior of the deformable piece (9) in the bumper (6), the said opening (10) being intended to capture a portion of the air having passed through the bumper (6).

8. The front part of a vehicle according to Claim 7, **characterized in that** the axis of the opening (10) is vertical.

9. The front part of a vehicle according to any one of Claims 6 to 8, **characterized in that** the deformable piece (9) is passed through by a second channel (12) originating at the level of the first channel (11), the said second channel (12) being disposed parallel to the longitudinal axis of the vehicle and terminating in the air filter (4).

10. The front part of a vehicle according to Claim 9, **characterized in that** the opening (10) is situated at one of the ends of the said channel (11), and **in that** the second channel (12) originates at the level of the other end of the said first channel (11), so as to connect the air filter (4), which is situated in an offset position with respect to the engine (2).

11. The front part of a vehicle according to Claim 9, **characterized in that** the opening (10) is situated in the central zone of the first channel (11), and **in that** the second channel (12) originates at the level of one of the ends of the first channel (11), the other end of the said first channel (11) being closed off to define a resonator (20).

12. The front part of a vehicle according to any one of Claims 1 to 11, **characterized in that** the deformable piece (9) is fixed to the bumper (9) and has, on its upper part, a multiplicity of ribs (21) suited to allow fresh air to pass beneath the bonnet (14), for cooling certain parts which are subject to powerful thermal stresses.

13. The front part of a vehicle according to Claim 12, **characterized in that** the ribs (21) are disposed parallel to the longitudinal axis of the vehicle.

14. The front part of a vehicle according to any one of the preceding claims, **characterized in that** the deformable piece (9) is made from polypropylene or from polyethylene.

## Patentansprüche

1. Vorderteil (1) eines Kraftfahrzeugs, der ein Motorantriebsaggregat (2), einen Luftversorgungskreislauf (3) für den Motor (2) mit einem Luftfilter (4) und einem Lufteingangshals (5), eine Motorhaube (14), einen Stoßfänger (6), in dem eine Stoßabsorptionsvorrichtung (8) untergebracht ist, die zum Dämpfen des Aufpralls eines Oberschenkelknochens eines Fußgängers in dem Fall eines zufälligen Zusammenpralls bestimmt ist, aufweist, wobei die Absorptionsvorrichtung (8) einen verformbaren Teil (9) aufweist, **dadurch gekennzeichnet, dass** der verformbare Teil (9) den Lufteingangshals (5) des Luftversorgungskreislaufs (3) des Motors (2) umfasst, wobei der verformbare Teil (9) ein länglicher Teil ist, der quer in Bezug zu der Längsachse des Fahrzeugs angeordnet ist und von einem Kühlmodul (16) des Motors (2) gehalten wird, wobei das Modul (16) vor dem Motor (2) in dem Fahrzeug positioniert ist.

2. Vorderteil eines Kraftfahrzeugs nach Anspruch 1, **dadurch gekennzeichnet, dass** der Lufteingangshals (5) aus einem ersten Kanal (11) des Luftversorgungskreislaufs (3) besteht, wobei der Kanal (11) zylindrisch ist und ein Längen-Durchmesserverhältnis größer als 4 hat.

3. Vorderteil eines Kraftfahrzeugs nach einem der Ansprüche 1 oder 2, **dadurch gekennzeichnet, dass** der Stoßfänger (6) die Vorderseite des Fahrzeugs bildet und dass der verformbare Teil (9) auf dem Niveau des oberen Teils (13) des Stoßfängers (6) in einem Bereich neben der Motorhaube (14) platziert ist.

4. Vorderteil eines Kraftfahrzeugs nach einem der Ansprüche 1 bis 3, **dadurch gekennzeichnet, dass** der Stoßfänger (6) mehrere Öffnungen (15) derart aufweist, dass Luft passieren kann, wobei ein Teil der derart übertragenen Luft in den Lufteingangshals (5) eindringt.

5. Vorderteil eines Fahrzeugs nach einem der Ansprüche 1 oder 2, **dadurch gekennzeichnet, dass** der längliche Teil (9) und das Kühlmodul (16) durch einen Einschubteil (17), der einem oberen Fassadenquerträger entspricht, getrennt sind.

6. Vorderteil eines Fahrzeugs nach einem der Ansprüche 1 oder 2, **dadurch gekennzeichnet, dass** der erste Kanal (11) des Luftversorgungskreislaufs (3) des Motors (2) in Bezug zu der Längsachse des Fahrzeugs quer platziert ist.

7. Vorderteil eines Fahrzeugs nach Anspruch 4, **dadurch gekennzeichnet, dass** der erste Kanal (11) eine Öffnung (10) besitzt, die auf der Außenseite des verformbaren Teils (9) in dem Stoßfänger (6) mündet, wobei die Öffnung (10) dazu bestimmt ist, einen Teil der Luft zu fangen, die den Stoßfänger (6) durchquert hat.

8. Vorderteil eines Fahrzeugs nach Anspruch 7, **dadurch gekennzeichnet, dass** die Öffnungsachse (10) vertikal ist.

9. Vorderteil eines Fahrzeugs nach einem der Ansprüche 6 bis 8, **dadurch gekennzeichnet, dass** der verformbare Teil (9) von einem zweiten Kanal (12) durchquert wird, der auf dem Niveau des ersten Kanals (11) entspringt, wobei der zweite Kanal (12) parallel zu der Längsachse des Fahrzeugs angeordnet ist und in dem Luftfilter (4) endet.

10. Vorderteil eines Fahrzeugs nach Anspruch 9, **dadurch gekennzeichnet, dass** die Öffnung (10) an einem der Enden des ersten Kanals (11) liegt, und dass der zweite Kanal (12) auf dem Niveau des anderen Endes des ersten Kanals (11) entspringt, so dass mit dem Luftfilter (4) verbunden wird, das sich in Bezug zu dem Motor (2) in verschobener Position befindet.

11. Vorderteil eines Fahrzeugs nach Anspruch 9, **dadurch gekennzeichnet, dass** sich die Öffnung (10) in dem zentralen Bereich des ersten Kanals (11) befindet, und dass der zweite Kanal (12) auf dem Niveau eines der Enden des ersten Kanals (11) entspringt, wobei das andere Ende des ersten Kanals (11) verschlossen ist, um einen Resonator (20) zu bilden.

12. Vorderteil eines Fahrzeugs nach einem der Ansprüche 1 bis 11, **dadurch gekennzeichnet, dass** der verformbare Teil (9) an dem Stoßfänger (9) befestigt ist und auf seinem oberen Teil mehrere Rippen (21) aufweist, die Frischluft unter der Motorhaube (14) durchlassen können, um bestimmte Teile, die starken Wärmebelastungen ausgesetzt sind, abzukühlen.

13. Vorderteil eines Fahrzeugs nach Anspruch 12, **dadurch gekennzeichnet, dass** die Rippen (21) parallel zur Längsachse des Fahrzeugs angeordnet sind.

14. Vorderteil eines Fahrzeugs nach einem der vorhergehenden Ansprüche, **dadurch gekennzeichnet, dass** der verformbare Teil (9) aus Polypropylen oder aus Polyethylen hergestellt wird.
